Europäisches Patentamt

European Patent Office

Office européen des brevets

(19)

(11) **EP 0 729 126 B1**

(12) **FASCICULE DE BREVET EUROPEEN**

(45) Date de publication et mention
de la délivrance du brevet:
**27.09.2000 Bulletin 2000/39**

(51) Int Cl.⁷: **G08G 5/02**, G05D 1/06,
G01C 23/00

(21) Numéro de dépôt: **96400271.1**

(22) Date de dépôt: **09.02.1996**

(54) **Procédé et dispositif de surveillance et de guidage d'aéronef pour atterrissage de précision**

Überwachungs- und Flugzeugnavigationsverfahren und -vorrichtung für Präzisionslandung

Monitoring and aviation guidance method and device for precision landing

(84) Etats contractants désignés:
**DE GB IT NL**

(30) Priorité: **17.02.1995 FR 9501826**

(43) Date de publication de la demande:
**28.08.1996 Bulletin 1996/35**

(73) Titulaire: **THOMSON-CSF SEXTANT
78141 Vélizy Villacoublay (FR)**

(72) Inventeurs:
• **Servat, Thierry
F-92402 Courbevoie Cedex (FR)**
• **Sicre, Jean-Luc
F-92402 Courbevoie Cedex (FR)**

(74) Mandataire: **Beylot, Jacques et al
Thomson-CSF Propriété Intellectuelle,
13, Avenue du Président Salvador Allende
94117 Arcueil Cédex (FR)**

(56) Documents cités:
**EP-A- 0 384 993        DE-A- 4 140 406
US-A- 4 247 843        US-A- 4 368 517
US-A- 4 454 496**

• **PATENT ABSTRACTS OF JAPAN vol. 014, no.
235 (M-0975), 18 Mai 1990 & JP-A-02 060897
(MITSUBISHI HEAVY IND LTD), 1 Mars 1990,**

**Description**

La présente invention concerne un perfectionnement au guidage, en approche et à l'atterrissage, d'aéronefs opérant en catégorie 2 ou 3A selon la certification d'organismes civils reconnus tels que la DGAC, la FAA ou le JAA afin de rendre les aéronefs aptes à opérer en catégorie immédiatement inférieure 3A ou 3B, cela à un moindre coût.

Les aéronefs opérant en catégorie 2 ou 3A doivent avoir, en approche à l'atterrissage, une visibilité verticale minimum ou hauteur de décision DH (Decision Height) de 50 pieds et une visibilité horizontale minimum ou portée visuelle de piste RVR (Runway Visual Range) de 200 mètres.

Ces limites de visibilité requises en catégorie 2 ou 3A sont adoptées pour des aéronefs équipés d'un pilote automatique contrôlé par une centrale anémo-barométrique ADC (Air Data Computer) fournissant l'altitude et la vitesse verticale, et par une centrale de référence de cap et d'assiette AHRS (Attitude Heading Reference System) sans plate-forme inertielle, associée à une boussole fournissant les assiettes longitudinale et transversale, les accélérations verticale et horizontales selon les trois axes, et le cap magnétique.

Malgré des performances déjà fort honorables les niveaux de certification 2 ou 3A, ne suffisent pas à certaines compagnies qui opèrent dans des contrées météorologiquement défavorisées car le respect des minima de visibilité de ces niveaux de certification oblige à dérouter une proportion non négligeable des vols et entraîne un manque à gagner important.

En conséquence, il existe un réel besoin de pouvoir faire évoluer les équipements d'un aéronef certifiés en catégorie 2 ou 3A vers la catégorie de certification immédiatement inférieure 3A ou 3B pour réduire les minima de visibilité et permettre des approches à l'atterrissage dans des conditions de moindre visibilité.

Une manière de faire est de changer le pilote automatique par un autre certifié en catégorie inférieure. Cette opération a l'inconvénient d'être coûteuse car elle peut impliquer le changement d'une centrale de référence d'attitude et de cap AHRS sans plate-forme inertielle par une centrale de classe inertielle type IRS (Inertial Reference System).

Une autre manière de faire pour apporter le surcroît de performances nécessaire est d'ajouter, à l'équipement de guidage d'un aéronef certifié en catégorie 2 ou 3A, un viseur tête haute HUD (Head Up Display) pour constituer un système hybride. Cet ajout a l'avantage de pouvoir se faire sous la forme d'un kit de mise à niveau pouvant être approvisionné directement par les compagnies aériennes et de s'insérer de façon harmonieuse sans modification majeure de l'architecture du système existant. Un système pourvu d'un tel viseur tête haute HUD est connu de US-A-4 454 496.

Les exigences pour la certification en catégories 3A et 3B des systèmes hybrides avec viseur tête haute sont réglementées par les autorités de certification (groupe JAR AWO et AC 120-28C FAR en particulier). Elles font apparaître de nouvelles contraintes qui sont celles de disposer d'informations de référence primaire de qualité supérieure et de nature différente à celles exigées strictement au titre de la catégorie déjà certifiée 2 ou 3A, donc pas nécessairement disponibles, comme par exemple, l'information de vitesse sol FPV (Flight Path Vector).

Il est donc nécessaire de proposer une source nouvelle d'élaboration de ces informations.

Ce problème est traditionnellement résolu par l'emport d'une centrale de classe inertielle type IRS ou par une mise à niveau AHRS/IRS impliquant pour la dernière solution une recertification du pilote automatique. Bien que techniquement satisfaisantes ces solutions présentent un intérêt économique médiocre étant donné le coût à l'achat et à la maintenance d'une centrale de classe inertielle.

Par ailleurs, il est de plus en plus envisagé d'équiper les aéronefs de récepteur de positionnement par satellites GPS (Global positioning System) afin de faciliter leur localisation et leur navigation. Dans cette perspective, un standard avionique (le TSO C 129c1) a été récemment établi sur les caractéristiques minimales que doit présenter un récepteur GPS embarqué à bord d'un aéronef. Ce standard impose au récepteur GPS de donner en plus des coordonnées de position: longitude, latitude et altitude les vitesses horizontales est-ouest, nord-sud et verticale du porteur.

Le but de l'invention est de proposer une solution à moindre coût, permettant de répondre aux besoins de compagnies aériennes voulant abaisser leur minima d'exploitation en phase d'approche de précision, de la catégorie certifiée 2 ou 3A vers la catégorie certifiée immédiatement inférieure 3A ou 3B au moyen d'un système hybride à base d'une centrale de référence d'attitude et de cap à bas coût AHRS, et d'un viseur tête haute utilisant, pour élaborer le vecteur vitesse sol FPV à afficher, les possibilités d'un récepteur GPS au standard avionique, et évitant l'emport d'une centrale de classe inertielle.

Elle a pour objet un procédé de surveillance et de guidage d'aéronef pour atterrissage de précision appliqué à un aéronef pourvu d'une centrale de référence d'attitude et de cap AHRS qui est équipée d'une boussole et qui délivre, entre autres, le cap magnétique $\Psi_m$ et l'accélération verticale $a_z$, d'une centrale anémo-barométrique ADC fournissant, entre autres, la vitesse verticale barométrique $V_{zB}$, d'un récepteur de positionnement par satellites GPS au standard avionique délivrant en plus des coordonnées de position latitude, longitude et altitude, les vitesses horizontales est-ouest et nord-sud $V_{EO}$ et $V_{NS}$, et d'un viseur tête haute sur lequel est affiché une ligne d'horizon artificiel et le vecteur vitesse sol FPV. Ce procédé consiste à situer l'extrémité du vecteur vitesse sol FPV sur le viseur tête haute au moyen de deux coordonnées angulaires, l'une verticale de pente FPA (Flight Path Angle) référencée par rapport à la ligne d'horizon artificielle et tirée de la relation :

$$FPA = Arctg \ \frac{V_{zBI}}{\sqrt{V_{EO}^2 + V_{NS}^2}}$$

où $V_{zBI}$ est la vitesse verticale baro-inertielle résultant d'une hybridation entre la vitesse verticale barométrique $V_{zB}$ délivrée par la centrale anémo-barométrique ADC et l'accélération verticale $a_z$ délivrée par la centrale de référence d'attitude et de cap AHRS,
l'autre horizontale de route $\Delta$ référencée par rapport à la médiane verticale de l'écran du viseur tête haute symbolisant le plan vertical longitudinal médian de symétrie de l'aéronef et tirée de la relation :

$$\Delta = -\Psi_m + Arctg \ \frac{V_{EO}}{V_{NS}} - decl$$

où decl est la déclinaison magnétique.

Elle a également pour objet un dispositif de surveillance et de guidage d'aéronef mettant en oeuvre le procédé précité et comportant une centrale de référence d'attitude et de cap AHRS qui est équipée d'une boussole et qui délivre, entre autres, le cap magnétique $\Psi_m$ et l'accélération verticale $a_z$, une centrale anémo-barométrique ADC fournissant, entre autres, la vitesse verticale barométrique $V_{zB}$, un récepteur de positionnement par satellites GPS au standard avionique délivrant en plus des coordonnées de position latitude, longitude et altitude, les vitesses horizontales est-ouest et nord-sud $V_{EO}$ et $V_{NS}$, un viseur tête haute sur lequel est affiché une ligne d'horizon artificiel et le vecteur vitesse sol FPV, et un calculateur de viseur tête haute équipé :

- de moyens de calcul de la coordonnée angulaire verticale de pente FPA (Flight Path Angle) de l'extrémité du vecteur vitesse sol FPV par rapport de la ligne d'horizon artificiel au moyen de la relation :

$$FPA = Arctg \ \frac{V_{zBI}}{\sqrt{V_{EO}^2 + V_{NS}^2}}$$

où $V_{zBI}$ est la vitesse verticale baro-inertielle résultant d'une hybridation entre la vitesse verticale barométrique $V_{zB}$ délivrée par la centrale anémo-barométrique et l'accélération verticale $a_z$ délivrée par la centrale de référence d'attitude et de cap AHRS, et
- de moyens de calcul de la coordonnée angulaire horizontale de route $\Delta$ de l'extrémité du vecteur vitesse sol FPV par rapport à la médiane verticale de l'écran du viseur tête haute symbolisant le plan vertical longitudinal médian de symétrie de l'aéronef au moyen de la relation :

$$\Delta = -\Psi_m + Arctg \ \frac{V_{EO}}{V_{NS}} - decl$$

où decl est la déclinaison magnétique.

Avantageusement, le dispositif comporte en outre un circuit de compensation de masses magnétiques RMCU (Remote Magnetic Compensator Unit) qui opère sur la boussole et qui permet d'affiner la mesure de cap magnétique en corrigeant l'influence des masses magnétiques de l'aéronef.

Avantageusement, le récepteur de positionnement par satellites GPS délivre également une information de vitesse verticale de l'aéronef qui est comparée avec l'information de vitesse verticale de l'aéronef déduite de mesures effectuées par la centrale de référence d'attitude et de cap AHRS et par la centrale anémo-barométrique ADC pour réaliser un contrôle de bon fonctionnement.

Avantageusement, le récepteur de positionnement par satellite GPS est pourvu d'un dispositif de contrôle d'intégrité permettant de s'assurer de sa disponibilité aussi bien en phase de préparation de vol qu'en début d'approche pour un atterrissage.

D'autres caractéristiques et avantages de l'invention ressortiront de la description d'un mode de réalisation donné à titre d'exemple. Cette description sera faite ci-après en regard du dessin dans lequel :

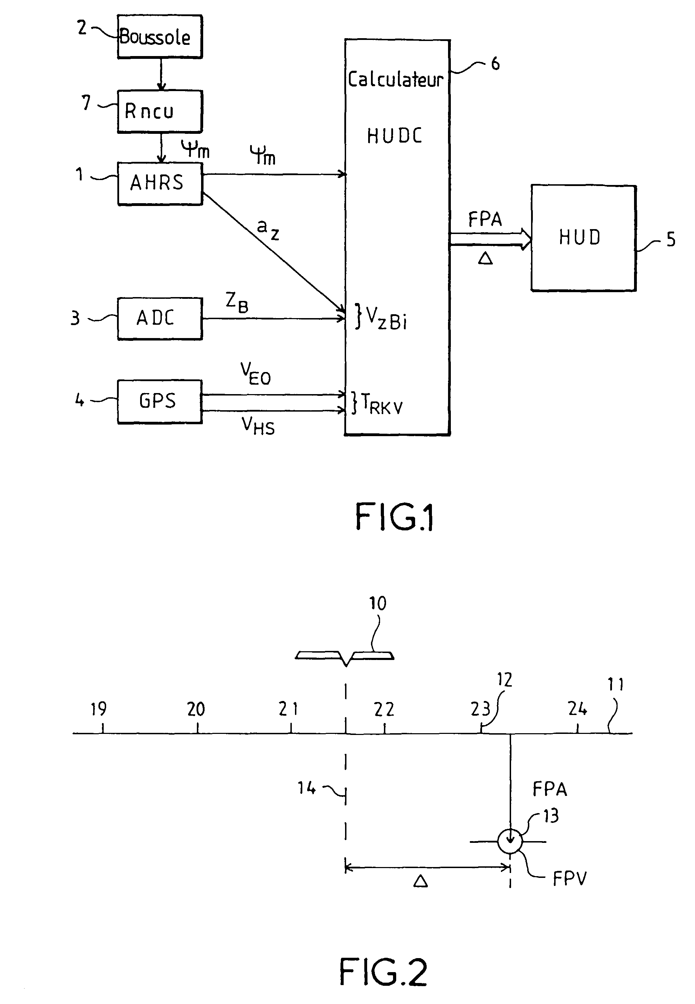

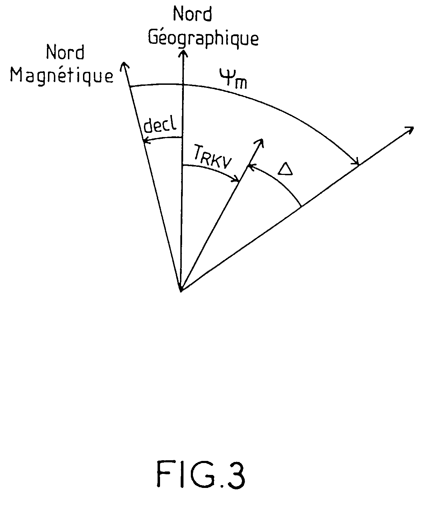

- une figure 1 montre un schéma de principe d'un dispositif de guidage d'aéronef conforme à l'invention ;
- une figure 2 illustre les symboles principaux apparaissant sur l'écran d'un afficheur tête haute ; et
- une figure 3 est un schéma illustrant la façon dont est obtenue la coordonnée angulaire de route de l'extrémité du vecteur vitesse sol FPV.

La figure 1 montre un système hybride de guidage pour aéronef à base d'un pilote automatique et d'un viseur tête haute permettant de passer à moindre frais d'un niveau de certification 2 ou 3A au niveau de certification immédiatement inférieur 3A ou 3B. On y distingue deux sortes d'appareillages de guidage : une première sorte d'appareillages préexistants constituant les équipements de base d'un aéronef répondant à un niveau de certification 2 ou 3A et une deuxième sorte d'appareillages ajoutés pour passer au niveau de certification immédiatement inférieur 3A ou 3B.

Les appareillages préexistants constituant les équipements de base d'un aéronef répondant à un niveau de certification 2 ou 3A sont la centrale de référence d'attitude et de cap AHRS 1 sans plate-forme inertielle, la boussole 2 et la centrale anémo-barométrique ADC 3.

La centrale de référence d'attitude et de cap AHRS 1 est un appareillage à bas coût par rapport à une centrale de classe inertielle IRS qui fournit des indications d'attitude et de cap, et l'accélération verticale.

La boussole 2 fournit le cap magnétique à la centrale de référence d'attitude et de cap AHRS 1.

La centrale anémo-barométrique ADC 3 fournit des indications d'altitude et de vitesse verticale.

Les appareillages ajoutés pour le passage au niveau de certification immédiatement inférieur sont un récepteur de positionnement par satellites GPS 4 au standard avionique, un viseur tête haute HUD 5 et son calculateur HUDC 6, et un compensateur de masse magnétique RMCU 7.

Le récepteur de positionnement par satellites GPS 4 a sa justification dans le fait qu'il apporte de grandes facilités à la localisation et par conséquent à la navigation d'un aéronef moderne. Il ne fait pas de doute qu'il fera partie, à court ou moyen terme, des équipements de navigation de base d'un aéronef moderne. D'ailleurs, il existe dés maintenant un standard avionique pour récepteur GPS (le TSO C 129c1 ). Le récepteur GPS, délivre, en plus de la position en latitude, longitude et altitude, les vitesses verticale et horizontales est-ouest et nord-sud. Il fournit ces informations sur un support multi-récepteur type ARINC 429 de sorte qu'il n'est pas nécessaire de lui prévoir une sortie spécifique à chaque fois que l'on envisage de lui donner une nouvelle utilisation.

Le viseur tête haute 5 est de type classique. Il est constitué d'une plaque semi-transparente à travers laquelle le pilote voit le paysage et d'un système de projection permettant d'afficher des symboles sur la plaque semi-transparente pour qu'ils soient vus par le pilote en superposition avec le paysage. Les principaux symboles affichés sont, comme on peut le voir sur la figure 2, une maquette avion 10 , une ligne d'horizon artificiel 11 graduée en échelle de cap 12 et un réticule 13 matérialisant sous la forme d'un petit cercle ailé la position de l'extrémité du vecteur vitesse sol FPV.

La maquette avion 10 est fixe et placée sur la référence longitudinale aéronef dans le plan longitudinal vertical de symétrie de l'aéronef. Elle permet en liaison avec l'échelle de cap 12, qui défile sur la ligne d'horizon artificiel 11 en fonction du cap suivi, d'apprécier le cap suivi.

La ligne d'horizon artificiel 11 se déplace sous les indications du système de navigation pour coïncider avec la ligne d'horizon. Elle permet, en liaison avec la maquette avion 10, d'apprécier, de manière grossière, les assiettes longitudinale et latérale de l'aéronef.

Le réticule 13 en forme de petit cercle ailé qui matérialise la position de l'extrémité du vecteur vitesse sol FPV en route et en pente est mobile sur l'écran du viseur tête haute, sa position en hauteur au-dessus ou au-dessous de la ligne d'horizon artificielle 11 dépendant d'un angle de pente FPA et son décalage latéral par rapport à la médiane du viseur tête haute passant par la maquette avion 10 dépendant d'un angle de route $\Delta$ déterminés l'un et l'autre par le calculateur 6 du viseur tête haute.

Le calculateur 6 du viseur tête haute HUD détermine la position de la ligne d'horizon artificielle 11 et de l'échelle de cap avec laquelle elle est graduée à partir des indications d'assiettes longitudinale et latérale de l'aéronef données par la centrale de référence d'attitude et cap AHRS 1. Il détermine aussi la position du réticule 13 repérant l'extrémité du vecteur vitesse sol. Pour ce faire, il calcule l'angle de pente FPA et l'angle de route $\Delta$ du vecteur vitesse sol FPV.

Pour le calcul de l'angle de pente du vecteur vitesse sol il procède à partir de la vitesse verticale baro-inertielle $V_{zBI}$ et des vitesses horizontales est-ouest et nord-sud $V_{EO}$ et $V_{NS}$ par mise en oeuvre de la relation :

$$FPA = Arctg \; \frac{V_{zBI}}{\sqrt{V_{EO}^2 + V_{NS}^2}} \qquad (1)$$

La vitesse verticale baro-inertielle $V_{zBI}$ est obtenue classiquement par hybridation de l'altitude barométrique $Z_B$ fournie par la centrale anémo-barométrique ADC 3 et de l'accélération verticale $a_z$ fournie par la centrale de référence d'attitude et de cap AHRS 1, cette hybridation consistant à intégrer l'accélération verticale $a_z$ pour en déduire une vitesse verticale inertielle $V_I$, et à combiner cette vitesse verticale inertielle à l'information d'altitude barométrique $Z_B$. Les vitesses horizontales est-ouest et nord-sud $V_{EO}$ et $V_{NS}$ sont fournies par le récepteur GPS au standard avionique.

La relation (1) met en avant le fait que la tangente de l'angle de pente FPA du vecteur vitesse sol FPV par rapport au plan horizontal repéré par la ligne d'horizon artificielle 11 est égale au rapport de la composante verticale $V_{zBI}$, à la composante horizontale $\sqrt{V_{EO}^2 + V_{NS}^2}$ du vecteur vitesse sol FPV.

Pour le calcul de l'angle de route $\Delta$ du vecteur vitesse sol FPV le calculateur 6 du viseur tête haute procède à partir du cap magnétique $\Psi_m$ fourni par la centrale de référence d'attitude et de cap AHRS 1, de l'angle de route vraie par rapport au nord géographique $Arctg V_{EO}/V_{NS}$ déduit des vitesses horizontales sol $V_{EO}$ et $V_{NS}$ délivrées par le récepteur GPS 4, et d'une déclinaison magnétique decl tirée d'une table adressée au moyen de la localisation faite par le récepteur GPS 4, par mise en oeuvre de la relation :

$$\Delta = -\Psi_m + Arctg \; \frac{V_{EO}}{V_{NS}} - decl$$

En effet, l'angle de route du vecteur vitesse sol FPV par rapport au nord géographique $T_{RKv}$ est donné par la valeur de l'arctangente du rapport de la vitesse horizontale est-ouest $V_{EO}$ et de la vitesse horizontale nord-sud $V_{NS}$ fournis par le récepteur GPS 4. Il faut en déduire l'angle de route $\Delta$ par rapport à la médiane verticale de l'écran du viseur tête haute passant par la maquette avion 10 c'est à dire par rapport à la référence horizontale fuselage RHF de l'aéronef. Cela consiste, comme le montre la figure 3, à soustraire, à l'angle de route $T_{RKv}$ référencé par rapport au nord géographique, l'angle de cap $\Psi_m$ référencé par rapport au nord magnétique et la déclinaison magnétique decl comptée positivement vers l'est.

Pour procurer une précision globale satisfaisant les niveaux requis par les opérations en catégorie 3A ou 3B, on fait appel à une table précise de déclinaison magnétique dans laquelle on se repère grâce à la localisation procurée par le récepteur GPS 4 et à une information de cap magnétique $\Psi_m$ compensée au moyen d'un dispositif de compensation de masses magnétiques RMCU 7 équipant la boussole.

Le niveau de sécurité requis est atteint en faisant appel aux redondances existant entre les informations fournies par la centrale de référence d'attitude et de cap AHRS 1, la centrale anémo-barométrique ADC 3 et le récepteur de positionnement par satellites GPS 4, notamment à l'information de vitesse verticale qui est délivrée à la fois par le récepteur de positionnement par satellites GPS 4 et par la centrale de référence d'attitude et de cap AHRS, et en utilisant un récepteur de positionnement par satellites GPS équipé de dispositifs de type RAIM (Receiver Autonomous Integrity Monitoring) permettant un contrôle de l'intégrité, une prédiction de disponibilité ou d'intégrité des informations GPS en phase de préparation de vol et une confirmation de disponibilité ou d'intégrité des informations GPS en début d'approche d'un terrain d'atterrissage.

Bien entendu, la présente invention n'est pas limitée au mode de réalisation décrit et représenté mais est susceptible de nombreuses variantes accessibles à l'homme de l'art sans que l'on s'écarte de l'invention, telle que définie par les revendications.

## Revendications

1. Procédé de surveillance et de guidage d'aéronef pour atterrissage de précision appliqué à un aéronef pourvu d'une centrale de référence d'attitude et de cap AHRS (1) qui est équipée d'une boussole (2) et qui délivre, entre autres, le cap magnétique $\Psi_m$ et l'accélération verticale $a_z$, d'une centrale anémo-barométrique ADC (3) fournissant, entre autres, l'altitude barométrique $Z_B$, d'un récepteur de positionnement par satellites GPS (4) au standard avionique délivrant en plus des coordonnées de position latitude, longitude et altitude, les vitesses horizontales est-ouest et nord-sud $V_{EO}$ et $V_{NS}$, et d'un viseur tête haute HUD (5) sur lequel est affiché une ligne d'horizon artificiel (11) et un vecteur vitesse sol FPV (13), caractérisé en ce qu'il consiste à situer l'extrémité du vecteur vitesse sol FPV sur le viseur tête haute HUD (5) au moyen de deux coordonnées angulaires, l'une verticale d'angle de pente FPA référencée par rapport à la ligne d'horizon artificiel (11) et tirée de la relation :

$$FPA = Arctg\ \frac{V_{zBI}}{\sqrt{V_{EO}^2 + V_{NS}^2}}$$

où $V_{zBI}$ est la vitesse verticale baro-inertielle résultant d'une hybridation entre l'altitude barométrique $Z_B$ délivrée par la centrale anémo-barométrique ADC et l'accélération verticale $a_z$ délivrée par la centrale de cap et d'assiette AHRS, l'autre horizontale d'angle de route $\Delta$ référencée par rapport à la médiane verticale (14) de l'écran du viseur tête haute symbolisant le plan longitudinal vertical de symétrie de l'aéronef et tirée de la relation :

$$\Delta = -\Psi_m + Arctg\ \frac{V_{EO}}{V_{NS}} - decl$$

où decl est la déclinaison magnétique.

2. Procédé selon la revendication 1, caractérisé en ce que la déclinaison magnétique est tirée d'une table de déclinaison magnétique dans laquelle on se repère grâce à la localisation fournie par le récepteur de positionnement par satellites GPS (4).

3. Procédé selon la revendication 1, appliqué à un aéronef pourvu d'un récepteur de positionnement par satellites GPS (4) délivrant une information de vitesse verticale, caractérisé en ce que l'intégrité des équipements est testée par une comparaison des informations de vitesse verticale délivrées par la centrale de référence d'attitude AHRS (1) associée à la centrale anémo-barométrique ADC (3) et par le récepteur de positionnement par satellites GPS (4).

4. Dispositif de surveillance et de guidage d'aéronef comportant une centrale de référence d'attitude et de cap AHRS (1) qui est équipée d'une boussole (2) et qui délivre, entre autres, le cap magnétique $\Psi_m$ et l'accélération verticale $a_z$, une centrale anémo-barométrique ADC (3) fournissant, entre autres, l'altitude barométrique $Z_B$, un récepteur de positionnement par satellites (4) au standard avionique délivrant en plus des coordonnées de position latitude, longitude et altitude, les vitesses horizontales est-ouest et nord-sud $V_{EO}$ et $V_{NS}$, un viseur tête haute HUD (5) sur lequel est affiché une ligne d'horizon artificiel (11) et le vecteur vitesse sol FPV (13), et un calculateur (6) de viseur tête haute caractérisé en ce que ledit calculateur (6) comporte :

- des premiers moyens de calcul de la coordonnée angulaire verticale de pente FPA de l'extrémité du vecteur vitesse sol FPV par rapport à la ligne d'horizon artificiel (11) par mise en oeuvre de la relation :

$$FPA = Arctg \frac{V_{zBI}}{\sqrt{V^2_{EO} + V\sqrt{{}^2_{NS}}}}$$

où $V_{zBI}$ est la vitesse verticale baro-inertielle résultant d'une hybridation entre l'altitude barométrique $Z_B$ délivrée par la centrale anémo-barométrique ADC (3) et l'accélération verticale $a_z$ délivrée par la centrale de cap et d'assiette AHRS (1), et

- des deuxièmes moyens de calcul de la coordonnée angulaire horizontale de route $\Delta$ de l'extrémité du vecteur vitesse sol par rapport à la médiane verticale de l'écran du viseur tête haute HUD (5), qui symbolise le plan longitudinal vertical de symétrie de l'aéronef, mettant en oeuvre la relation :

$$\Delta = -\Psi_m + Arctg \frac{V_{EO}}{V_{NS}} - decl$$

où decl est la déclinaison magnétique.

**5.** Dispositif selon la revendication 4, caractérisé en ce qu'il comporte en outre un dispositif de compensation de masses magnétique RMCU (7) corrigeant l'erreur de la boussole (2) induite par l'influence des masses magnétiques de l'aéronef.

**6.** Dispositif selon la revendication 4, caractérisé en ce que le récepteur de positionnement par satellites GPS (4) est pourvu d'un dispositif de contrôle d'intégrité.

**7.** Dispositif selon la revendication 4, pourvu d'un récepteur de positionnement par satellites GPS (4) délivrant une information de vitesse verticale, caractérisé en ce qu'il comporte en outre des moyens de comparaison des informations de vitesse verticale délivrées par le récepteur de positionnement par satellites GPS (4) et par la centrale de référence d'attitude et de cap AHRS (1) associée à la boussole (2) testant l'intégrité des équipements.

**Patentansprüche**

**1.** Verfahren zur Überwachung und Führung eines Flugzeugs bei einer Präzisionslandung, das eine Trimm- und Kursbezugszentrale AHRS (1) mit einer Bussole (2) besitzt die unter anderem den magnetischen Kurs $\Psi_m$ und die vertikale Beschleunigung $a_z$ liefert, das weiter eine windbarometrische Zentrale ADC (3) besitzt, die unter anderem die barometrische Höhe $Z_B$ liefert, weiter einen Satellitenortungsempfänger GPS (4) gemäß Luftfahrtnorm, der außer den Koordinaten über die Breite, Länge und Höhe die Horizontalgeschwindigkeiten in Ost-West-Richtung $V_{EO}$ und in Nord-Südrichtung $V_{NS}$ liefert, und schließlich ein Head-up-Sichtgerät HUD (5) besitzt, auf dem eine Linie eines künstlichen Horizonts (11) sowie ein Geschwindigkeitsvektor FPV (13) über Grund angezeigt werden, dadurch gekennzeichnet, daß es darin besteht, das Ende des Geschwindigkeitsvektors FPV über Grund auf dem Head-up-Sichtgerät HUD (5) mithilfe zweier Winkelkoordinaten anzuzeigen, von denen die eine eine vertikale Koordinate ist und dem Neigungswinkel FPA bezüglich des künstlichen Horizonts (11) aufgrund der folgenden Beziehung angibt:

$$FPA = arctg\ (V_{zBI}/\sqrt{V^2_{EO} + V^2_{NS}})$$

wobei $V_{zBI}$ die vertikale barometrische Geschwindigkeit ist, die aus einer Verknüpfung zwischen der von der windbarometrischen Zentrale ADC gelieferten barometrischen Höhe $Z_B$ und der von der Trimm- und Kursbezugszentrale AHRS gelieferten vertikalen Beschleunigung $a_z$ resultiert, während die andere eine horizontale Koordinate ist und den Kurswinkel $\Delta$ bezüglich der senkrechten Mittelachse (14) der Sichtscheibe des Head-up-Sichtgeräts bezeichnet und symbolisch die vertikale Längssymmetrieebene des Flugzeugs bezeichnet und durch folgende Gleichung gegeben ist:

$$\Delta = -\Psi_m + arctg(V_{EO}/V_{NS}) - decl$$

wobei decl die Magnetabweichung ist.

**2.** Verfahren nach Anspruch 1, dadurch gekennzeichnet, daß die Magnetabweichung aus'einer Tabelle von Magnetabweichungen abhängig von der vom Satellitenortungsempfänger GPS (4) gelieferten Position entnommen wird.

**3.** Verfahren nach Anspruch 1 in Anwendung auf ein Flugzeug, das einen Satellitenortungsempfänger GPS (4) besitzt, welcher eine vertikale Geschwindigkeitsinformation liefert, dadurch gekennzeichnet, daß die Integrität der Geräte durch einen Vergleich der von der Trimm- und Kursbezugszentrale AHRS (1) in Verbindung mit der windbarometrischen Zentrale ADC (3) gelieferten Information über die vertikale Geschwindigkeit und den entsprechenden vom Satellitenortungsempfänger GPS (4) gelieferten Informationen überprüft wird.

**4.** Vorrichtung zur Überwachung und zur Führung eines Flugzeugs, die eine Trimm- und Kursbezugszentrale AHRS (1) mit einer Bussole (2) besitzt, die anderem den magnetischen Kurs $\Psi_m$ und die verti-

kale Beschleunigung $a_z$ liefert, und weiter eine windbarometrische Zentrale ADC (3), die unter anderem die barometrische Höhe $Z_B$ liefert, einen Satellitenortungsempfänger (4) gemäß Luftfahrtnorm, der außer den Positionskoordinaten bezüglich Breite, Länge und Höhe auch die horizontalen Geschwindigkeiten in Ost-West-Richtung $V_{EO}$ und in Nord-Süd-Richtung $V_{NS}$ liefert, ein Head-up-Sichtgerät HUD (5), auf dem eine Linie (11) des künstlichen Horizonts und der Geschwindigkeitsvektor FPV (13) über Grund angezeigt werden, und einen Rechner (6) für das Head-up-Sichtgerät besitzt, dadurch gekennzeichnet, daß der Rechner (6) aufweist:

- erste Mittel zur Berechnung der vertikalen Winkelkoordinate FPA des Endes des Geschwindigkeitsvektors FPV über Grund bezüglich des künstlichen Horizonts (11) durch Anwendung der folgenden Gleichung:

$$FPA = arctg\ (V_{zBI}/\sqrt{V^2_{EO} + V^2_{NS}})$$

wobei $V_{zBI}$ die vertikale barometrische Geschwindigkeit ist, die aus einer Verknüpfung zwischen der von der windbarometrischen Zentrale ADC (3) gelieferten barometrischen Höhe $Z_B$ und der von der Trimm- und Kursbezugszentrale AHRS (1) gelieferten vertikalen Beschleunigung $a_z$ resultiert,

- und zweite Mittel zur Berechnung der horizontalen Winkelkoordinate des Kurses Δ des Endes des Geschwindigkeitsvektors über Grund bezüglich der senkrechten Mittelachse der Sichtscheibe des Head-up-Sichtgeräts HUD (5), die symbolisch die senkrechte Längssymmetrieebene des Flugzeugs darstellt, und zwar unter Anwendung der folgenden Formel:

$$\Delta = -\Psi_m + arctg(V_{EO}/V_{NS}) - decl$$

wobei decl die magnetische Abweichung ist.

**5.** Vorrichtung nach Anspruch 4, dadurch gekennzeichnet, daß sie weiter eine Vorrichtung zur Kompensation von magnetischen Massen RMCU (7) enthält, die den Fehler der Bussole (2) korrigiert, der durch den Einfluß der magnetischen Massen des Flugzeugs hervorgerufen wurde.

**6.** Vorrichtung nach Anspruch 4, dadurch gekennzeichnet, daß der Satellitenortungsempfänger GPS (4) eine Vorrichtung zur Integritätskontrolle enthält.

**7.** Vorrichtung nach Anspruch 4 mit einem Satellitenortungsempfänger GPS (4), der eine Information über die vertikale Geschwindigkeit liefert, dadurch gekennzeichnet, daß sie weiter Mittel zum Vergleich der Informationen über die vertikale Geschwindigkeit, die vom Satellitenortungsempfänger GPS (4) geliefert werden, mit den Informationen über die vertikale Geschwindigkeit enthält, die von der Trimm- und Kursbezugszentrale AHRS (1) in Verbindung mit der Bussole (2) geliefert werden, um die Integrität der Geräte zu überprüfen.

**Claims**

**1.** Aircraft monitoring and guidance process for precision landing applied to an aircraft provided with an AHRS attitude and heading reference unit (1) which is equipped with a compass (2) and which delivers, among other things the magnetic heading $\psi_m$ and the vertical acceleration $a_z$, with an ADC air data unit (3) supplying, among other things, the barometric altitude $Z_B$, with a GPS satellite positioning receiver (4) to avionics standard moreover delivering latitude, longitude and altitude position coordinates, the east-west and north-south horizontal velocities $V_{EW}$ and $V_{NS}$, and with a HUD head-up display (5) on which is displayed an artificial horizon line (11) and an FPV ground speed vector (13), characterized in that it consists in siting the end of the ground speed vector FPV on the head-up display HUD (5) by means of two angular coordinates, one vertical for glide angle FPA referenced with respect to the artificial horizon line (11) and derived from the relation:

$$FPA = Arctan\ \frac{V_{zBI}}{\sqrt{V^2_{EW} + V^2_{NS}}}$$

where $V_{zBI}$ is the baro-inertial vertical speed resulting from hybridization between the barometric altitude $Z_B$ delivered by the air data unit ADC and the vertical acceleration $a_z$ delivered by the heading and trim unit AHRS, the other horizontal course angle Δ referenced with respect to the vertical median (14) of the screen of the head-up display symbolizing the vertical longitudinal plane of symmetry of the aircraft and derived from the relation:

$$\Delta = -\Psi_m + Arctan\frac{V_{EW}}{V_{NS}} - decl$$

where decl is the magnetic declination.

**2.** Process according to Claim 1, characterized in that the magnetic declination is derived from a magnetic declination table in which charting is achieved by virtue of the location fix supplied by the GPS satellite positioning receiver (4).

3. Process according to Claim 1, applied to an aircraft provided with a GPS satellite positioning receiver (4) delivering a vertical speed cue, characterized in that the integrity of the equipment is tested by a comparison of the vertical speed cues delivered by the AHRS attitude reference unit (1) associated with the air data unit ADC (3) and by the GPS satellite positioning receiver (4).

4. Aircraft monitoring and guidance device comprising an AHRS attitude and heading reference unit (1) which is equipped with a compass (2) and which delivers, among other things the magnetic heading $\Psi_m$ and the vertical acceleration $a_z$, with an ADC air data unit (3) supplying, among other things, the barometric altitude $Z_B$, with a satellite positioning receiver (4) to avionics standard moreover delivering latitude, longitude and altitude position coordinates, the east-west and north-south horizontal velocities $V_{EW}$ and $V_{NS}$, and with a HUD head-up display (5) on which is displayed an artificial horizon line (11) and the FPV ground speed vector (13), and a head-up display computer (6) characterized in that the said computer (6) comprises:

- first means of computing the vertical glide angular coordinate FPA of the end of the ground speed vector FPV with respect to the artificial horizon line (11) by implementing the relation:

$$FPA = Arctan \frac{V_{zBI}}{\sqrt{V_{EW}^2 + V_{NS}^2}}$$

where $V_{zBI}$ is the baro-inertial vertical speed resulting from hybridization between the barometric altitude $Z_B$ delivered by the air data unit ADC (3) and the vertical acceleration $a_z$ delivered by the heading and trim unit AHRS (1), and

- second means of computing the horizontal course angular coordinate $\Delta$ of the end of the ground speed vector with respect to the vertical median of the screen of the head-up display HUD (5), which symbolizes the vertical longitudinal plane of symmetry of the aircraft, implementing the relation:

$$\Delta = -\Psi_m + Arctan \frac{V_{EW}}{V_{NS}} - decl$$

where decl is the magnetic declination.

5. Device according to Claim 4, characterized in that it furthermore comprises a magnetic masses compensation device RMCU (7) correcting the compass (2) error induced by the influence of the magnetic masses of the aircraft.

6. Device according to Claim 4, characterized in that the GPS satellite positioning receiver (4) is provided with an integrity checking device.

7. Device according to Claim 4, provided with a GPS satellite positioning receiver (4) delivering a vertical speed cue, characterized in that it furthermore comprises means for comparing the vertical speed cues delivered by the GPS satellite positioning receiver (4) and by the attitude and heading reference unit AHRS (1) associated with the compass (2) testing the integrity of the equipment.

FIG.1

FIG.2

FIG.3